Europäisches Patentamt

(19) European Patent Office

Office européen des brevets

(11) Numéro de publication : **0 340 070 B1**

(12) **FASCICULE DE BREVET EUROPEEN**

(45) Date de publication du fascicule du brevet :
24.07.91 Bulletin 91/30

(51) Int. Cl.$^5$ : **C01G 49/10**

(21) Numéro de dépôt : 89401038.8

(22) Date de dépôt : **14.04.89**

(54) **Procédé de synthèse du chlorure ferrique.**

(30) Priorité : 29.04.88 FR 8805799

(43) Date de publication de la demande :
02.11.89 Bulletin 89/44

(45) Mention de la délivrance du brevet :
24.07.91 Bulletin 91/30

(84) Etats contractants désignés :
AT BE CH DE ES FR GB GR IT LI LU NL SE

(56) Documents cités :
BE-A- 641 141
FR-A- 2 410 629

(56) Documents cités :
CHEMICAL ABSTRACTS, vol. 82, no. 20, mai
1975, page 114, no. 127078e, Columbus, Ohio,
US; & JP-A-74 113 798 (ASAHI ELECTRO-
CHEMICAL CO., LTD) 30-10-1974
CHEMICAL ABSTRACTS, vol. 90, no. 24, juin
1979, page 139, no. 189260g, Columbus, Ohio,
US; & ES-A-458 899 (ESTEBAN AZANZA
BERRUETA) 01-04-1978

(73) Titulaire : ATOCHEM
4 & 8, Cours Michelet La Défense 10
F-92800 Puteaux (FR)

(72) Inventeur : Clair, René
La Vrignoise Saint Julien
F-13500 Martigues (FR)
Inventeur : Gallet, Alain
11 avenue de la Durance
F-13117 Lavera (FR)

EP 0 340 070 B1

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

## Description

La présente invention concerne un procédé de synthèse du chlorure ferrique et plus particulièrement la chloration du chlorure ferreux en solution aqueuse. Ce chlorure ferrique est utilisé comme agent floculant dans le traitement des eaux. On peut se reporter au KIRK OTHMER 3ème édition, volume 24, pages 394-396 (1984) et au volume 10, page 498 (1980) où figure cette application. Le procédé le plus simple consiste à attaquer du fer par de l'acide chlorhydrique concentré, on obtient ainsi une solution à environ 36% en poids de chlorure ferreux ($FeCl_2$) qu'on chlore pour obtenir une solution de chlorure ferrique ($FeCl_3$) titrant environ 41% en poids et directement utilisable comme agent floculant. Cette solution à 41% est la forme commerciale habituelle. Il est nécessaire d'obtenir une solution concentrée de $FeCl_2$ puisque le $FeCl_2$ et le $FeCl_3$ peuvent lors d'une concentration par évaporation subir une hydrolyse partielle donnant HCl. La présence d'HCl dans le $FeCl_3$ est gênante pour le traitement des eaux. Ce procédé nécessite l'utilisation d'acide chlorhydrique concentré.

Le brevet US-A-3.682.592 décrit un procédé dans lequel la solution de chlorure ferreux est mise en contact avec de l'oxygène.

Le brevet US-A-4.066.748 décrit un procédé à partir d'une solution de $FeCl_2$ venant d'un bain de décapage. Ce procédé oblige à concentrer le chlorure ferreux et nécessite une chloration en deux étapes.

Ce brevet montre dans l'exemple 3 l'impossibilité en utilisant un seul réacteur de chlorer complètement le chlorure ferreux avec la quantité stoechiométrique de chlore, ou l'obligation d'utiliser un excédent de chlore pour chlorer tout le chlorure ferreux.

Dans la réalisation de cette invention selon le schéma expliqué dans l'exemple 4 on montre la chloration du $FeCl_2$ en $FeCl_3$ mais en deux réacteurs qui sont alimentés par un mélange $FeCl_2/FeCl_3$.

On a maintenant trouvé un procédé qui permet de convertir tout le chlorure ferreux avec la quantité stoechiométrique de chlore en un seul réacteur.

La présente invention concerne un procédé de synthèse du chlorure ferrique à partir du chlorure ferreux et en présence de chlorure ferrique caractérisé en ce qu'il consiste à introduire la majeure partie du chlorure ferreux au sommet d'un réacteur essentiellement vertical, à introduire la majeure partie du chlore au pied du réacteur, à introduire un courant latéral de chlorure ferrique dans le réacteur et à recueillir en pied dudit réacteur une solution contenant essentiellement du chlorure ferrique.

Le réacteur assure la mise en contact du chlore et des chlorure ferreux et ferriques. Le réacteur est essentiellement vertical, c'est-à-dire que c'est une capacité telle que le plus petit cylindre qui contient cette capacité ait une génératrice au moins égale au diamètre de sa section circulaire, cette génératrice étant verticale ou proche de la verticale.

On utilise par exemple une colonne du genre colonne à distiller ou colonne d'absorption. On utilise avantageusement une colonne munie de dispositifs de contact gaz/liquide tels que des plateaux ou des garnissages d'anneaux ou de plusieurs de ces dispositifs.

La hauteur de cette colonne peut être comprise entre 0,1 et 40 mètres, et de préférence entre 2 et 20 mètres. Le chlorure ferreux se présente sous forme d'une solution aqueuse, de même que le chlorure ferrique. La majeure partie du chlorure ferreux, c'est-à-dire au moins la moitié de la solution est introduite au sommet du réacteur, et le reste de la solution de chlorure ferreux peut être introduit à différentes hauteurs pourvu toutefois que ce soit au-dessus de l'alimentation en chlore qui est la plus proche du pied du réacteur, c'est-à-dire qui géométriquement est la plus basse. Avantageusement on introduit le chlorure ferreux en un seul courant au sommet du réacteur. Le chlorure ferreux est sous forme d'une solution aqueuse contenant essentiellement du chlorure ferreux mais pouvant contenir déjà du chlorure ferrique et/ou de l'acide chlorhydrique.. On peut utiliser du chlore liquide ou gazeux ou un gaz ou un liquide contenant du chlore. La majeure partie du chlore, c'est-à-dire au moins la moitié du courant contenant du chlore est introduite au pied du réacteur et le reste peut être introduit à différentes hauteurs du réacteur.

Avantageusement on introduit le chlore en pied du réacteur.

On recueille au sommet du réacteur dans la phase gazeuse les inertes contenus dans le chlore et éventuellement le chlore non réagi.

Le réacteur est alimenté par un courant latéral de chlorure ferrique, ce courant est sous forme d'une solution aqueuse contenant essentiellement du chlorure ferrique. "latéral" veut dire qu' on introduit le chlorure ferrique entre l'alimentation de chlorure ferreux du sommet et l'alimentation de chlore du pied. On ne sortirait pas du cadre de l'invention en utilisant une solution contenant jusqu'à 1% en poids de chlorure ferreux. Ce chlorure ferrique peut aussi contenir un peu d'HCl. Le chlorure ferrique peut être introduit latéralement en plusieurs points. Avantageusement on l'introduit en une fois et de préférence dans le tiers supérieur du réacteur.

Avantageusement on utilise une solution de chlorure ferreux et une solution de chlorure ferrique ne contenant pas plus de 1% en poids d'HCl exprimé par rapport au poids des deux solutions de chlorure ferreux et ferrique ce qui permet d'utiliser le chlorure ferrique directement comme agent floculant pour le traitement des eaux.

Avantageusement le réacteur fonctionne à une température modérée c'est-à-dire telle que cette température ajoutée au temps de séjour ne provoque pas une hydrolyse du $FeCl_2$.

Bien que la réaction entre le chlorure ferreux et le chlore soit totale, avantageusement on respecte un temps de séjour du chlorure ferreux d'au moins 10 secondes dans le réacteur, et de préférence inférieur à 4 heures.

Il n'est pas nécessaire de chlorer tout le $FeCl_2$, les spécifications du chlorure ferrique peuvent parfois tolérer de 0,1 à 1% en poids de $FeCl_2$ dans la solution de chlorure ferrique. On ne sortirait pas du cadre de l'invention en utilisant un excès de chlore par rapport à la stoechiométrie.

Avantageusement la température du milieu réactionnel est comprise entre 50 et 100°C. La pression peut être quelconque, par commodité on opère entre la pression atmosphérique et 6 bars, et de préférence entre la pression atmosphérique et 1 bar relatif.

On recueille au pied du réacteur une solution contenant essentiellement du chlorure ferrique. Selon une forme préférée de l'invention cette solution est recyclée au réacteur comme alimentation latérale en chlorure ferrique. En régime stationnaire on soutire avant le recyclage une quantité de chlorure ferrique correspondant en moles à la quantité de chlorure ferreux introduite dans le réacteur. Ce soutirage constitue la production de chlorure ferrique. On peut aussi disposer un échangeur de chaleur sur ce recyclage avant le retour dans le réacteur de manière à extraire les calories dues à la réaction de chloration du chlorure ferreux. On peut aussi évaporer une partie de l'eau de la solution de chlorure ferrique en sortie du réacteur, ou de la solution qu'on soutire, ou de la solution qu'on recycle dans le réacteur ou toute combinaison de ces solutions. Cette évaporation peut être faite par un évaporateur conventionnel ou par exemple par une détente provoquant ainsi une vaporisation de l'eau.

On peut éventuellement réchauffer la solution de chlorure ferrique avant l'évaporation.

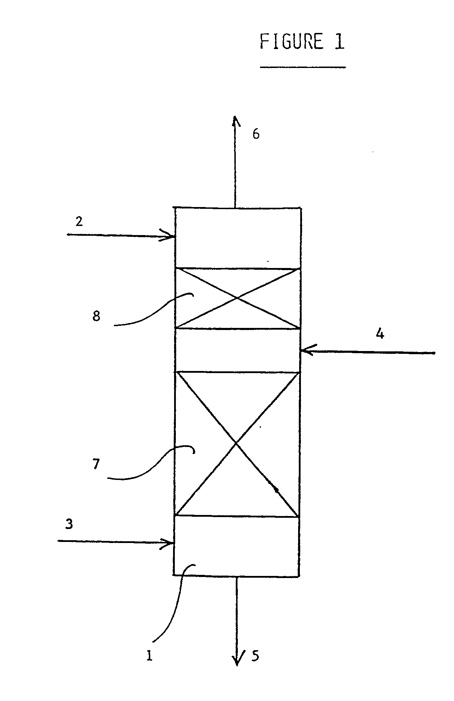

La figure 1 représente un exemple de mise en oeuvre de l'invention.

La colonne (1) qui comprend deux lits de garnissage (7) et (8) est alimentée en (2) en chlorure ferreux, en (3) en chlore et en (4) en chlorure ferrique. On recueille en (6) les inertes contenus dans le courant de chlore (3) et en (5) une solution de chlorure ferrique.

La figure 2 représente une autre mise en oeuvre de l'invention. (On utilise les mêmes numéro qu'à la figure 1). La solution de chlorure ferrique (5) est détendue en (12). La phase liquide (11) se divise en un courant (9) qui constitue la production de chlorure ferrique et un courant (4) qui est recyclé au réacteur (1). Le pot de détente (12) est relié par (10) à un éjecteur à vapeur. (13) est un échangeur de chaleur.

Les exemples suivants illustrent l'invention sans la limiter.

## EXEMPLE 1

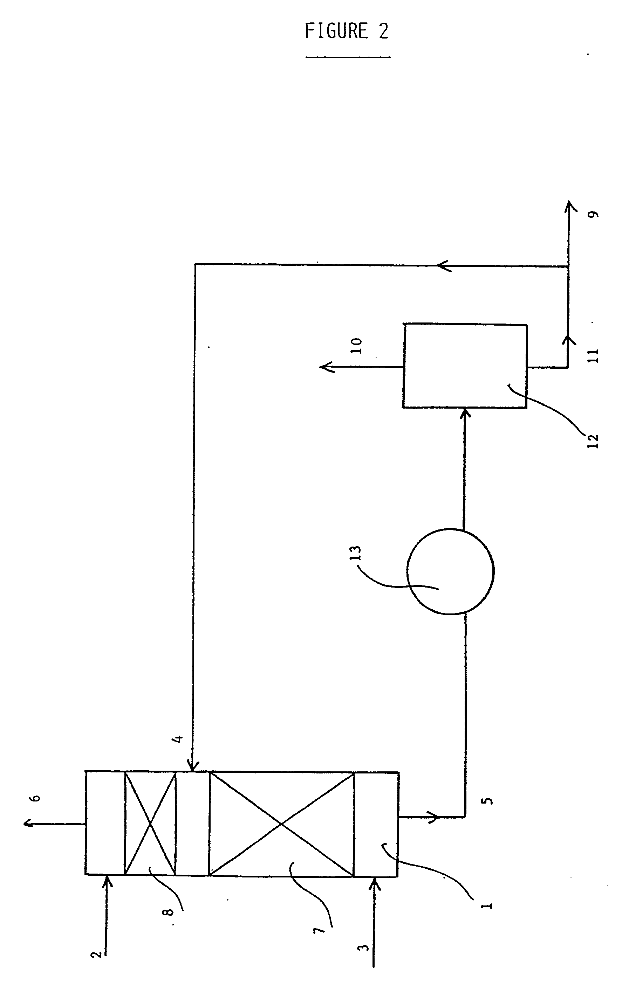

On utilise un dispositif conforme à la figure 2 dans lequel la colonne (1) est en verre de diamètre intérieur 0,35 m et présente une hauteur de garnissage de 7 m pour la partie (7) et 3 m pour la partie (8).

On introduit en (2) une solution de 296 kg/h de $FeCl_2$ et 704 kg/h d'eau à 80°C et en (3) un débit de 82,7 kg/h de chlore et 5 kg/h d'inertes. On recueille en (6) les 5 kg/h d'inertes et en (5) une solution de chlorure ferrique à 85°C. La colonne (1) opère à une pression de 1,1 bars absolus. On réchauffe le chlorure ferrique de 85 à 94°C par l'échangeur (13), puis on détend à une pression de 0,25 bar absolus. On recycle en (4) une solution contenant 2272 kg/h de $FeCl_3$ et 3269 kg/h d'eau et on soutire en (10) 379 kg/h de $FeCl_3$ dilués dans 545 kg/h d'eau.

## EXEMPLE 2 (Comparatif)

On opère comme dans l'exemple 1 mais en alimentant la colonne (1) avec le chlorure ferreux entre les deux lits (7) et (8), c'est-à-dire à la même hauteur que le recyclage (4). Pour obtenir la même conversion du $FeCl_2$ en $FeCl_3$ il a été nécessaire d'augmenter le débit de chlore à 88 kg/h, c'est-à-dire 88 kg/h de chlore et 5,32 kg/h d'inertes. L'excédent de chlore et les inertes sortent en (6).

## Revendications

1. Procédé de synthèse du chlorure ferrique à partir du chlorure ferreux et en présence de chlorure ferrique, caractérisé en ce qu'il consiste
   - à introduire la majeure partie du chlorure ferreux, et de préférence la totalité, au sommet d'un réacteur essentiellement vertical, le reste éventuel de chlorure ferreux étant introduit au-dessus de l'alimentation en chlore du pied,
   - à introduire la majeure partie, et de préférence la totalité, du chlore au pied du réacteur,
   - à introduire un courant latéral de chlorure ferrique dans le réacteur entre l'alimentation de chlorure ferreux du sommet et l'alimentation de chlore du pied,
   - et à recueillir au pied dudit réacteur une solution contenant essentiellement du chlorure ferrique.

2. Procédé selon la revendication 1, caractérisé en ce que le réacteur est une colonne contenant des dispositifs de contact gaz/liquide.

3. Procédé selon l'une des revendications 1 ou 2, caractérisé en ce que le courant latéral de chlorure ferrique est introduit dans le tiers supérieur du réacteur.

## Claims

1. Process for the synthesis of ferric chloride from ferrous chloride and in the presence of ferric chloride, characterised in that it consists

in introducing most, and preferably all, of the ferrous chloride at the top of an essentially vertical reactor, any remainder of ferrous chloride being introduced above the chlorine feed at the bottom,

in introducing most, and preferably all, of the chlorine at the bottom of the reactor,

in introducing a side stream of ferric chloride into the reactor between the ferrous chloride feed at the top and the chlorine feed at the bottom

and in collecting at the bottom of the said reactor a solution containing essentially ferric chloride.

2. Process according to Claim 1, characterised in that the reactor is a column containing devices for gas/liquid contact.

3. Process according to either of Claims 1 or 2, characterised in that the side stream of ferric chloride is introduced into the upper third of the reactor.


## Patentansprüche

1. Verfahren zur Synthese von Eisen-III-chlorid ausgehend von Eisen-II-chlorid und in Gegenwart von Eisen-III-chlorid, dadurch gekennzeichnet, daß man

den Hauptteil Eisen-II-chlorid und vorzugsweise die Gesamtmenge, am Kopf eines im wesentlichen vertikalen Reaktors einspeist, wobei gegebenenfalls der Rest an Eisen-II-chlorid oberhalb der Einspeisungsstelle für Chlor am Boden zugeführt wird,

den Hauptteil und vorzugsweise die Gesamtmenge Chlor am Boden des Reaktors zuführt,

einen seitlichen Strom Eisen-III-chlorid in den Reaktor einführt, zwischen der Einspeisung von Eisen-II-chlorid am Kopf und der Einspeisung von Chlor am Boden,

und am Boden des Reaktors eine Lösung abzieht, die im wesentlichen Eisen-III-chlorid enthält.

2. Verfahren nach Anspruch 1, dadurch gekennzeichnet, daß der Reaktor eine Säule ist, die Vorrichtungen für den Kontakt Gas/Flüssigkeit enthält.

3. Verfahren nach einem der Ansprüche 1 oder 2, dadurch gekennzeichnet, daß der seitliche Strom von Eisen-III-chlorid im oberen Drittel des Reaktors eingeführt wird.

FIGURE 1

FIGURE 2